# EUROPEAN PATENT APPLICATION

(11) **EP 2 482 104 A2**
(43) Date of publication of application: **01.08.2012**
(21) Application number: 10818964.8
(22) Date of filing: 24.08.2010
(51) Int. Cl.: G02B 5/30, G02B 1/10

(54) **HIGH ULTRAVIOLET TRANSMITTING DOUBLE-LAYER WIRE GRID POLARIZER FOR FABRICATING PHOTO-ALIGNMENT LAYER AND FABRICATION METHOD THEREOF**

(30) Priority: 22.09.2009 KR 20090089794; 24.08.2010 KR 20100081933
(71) Applicant: LG Chem, Ltd., Seoul 150-875 (KR)
(72) Inventor: KIM, Jae-Jin, Seoul 137-747 (KR); KIM, Sin-Young, Daejeon 300-040 (KR); SHIN, Bu-Gon, Daejeon 305-792 (KR); KIM, Tae-Su, Daejeon 301-150 (KR)
(74) Representative: Goddar, Heinz J.
(86) International application number: PCT/KR2010/005647
(87) International publication number: WO 2011/037323

(57) **Abstract**

There are provided a UV high-transmittance double-layer wire grid polarizer for a photo-alignment film and a method for manufacturing the same. The UV high-transmittance double-layer wire grid polarizer for a photo-alignment film includes: a substrate; an anti-reflection layer disposed on the substrate; a patterned photoresist layer disposed on the anti-reflection layer; and metal thin films disposed on the photoresist layer and the anti-reflection layer.

## Description

### [Technical Field]

The present invention relates to an ultraviolet (UV) high-transmittance double-layer wire grid polarizer for a photo-alignment film and a method for manufacturing the same.

### [Background Art]

In a Twisted Nematic (TN) mode using a Thin Film Transistor-Liquid Crystal Display (TFT-LCD) homogeneous alignment, liquid crystals need to be appropriately aligned in a specific direction. Such an alignment of liquid crystals is achieved by a surface-treated alignment film. Since the performance of TFT-LCD is greatly dependent on the aligned state of the liquid crystals, the development of excellent alignment films is very important in the manufacturing of TFT-LCD.

In a process of coating a liquid crystal material between glass substrates, simply coating the liquid crystals is not enough to give orientation to the liquid crystals. Thus, it is necessary to form alignment films on the inner walls of substrates which are in contact with the liquid crystals. Alignment films are manufactured by forming fine patterns in a specific direction. To this end, a SiO oblique evaporation method, a rubbing method, or a photo-alignment method may be widely used.

As for the SiO oblique evaporation method, a metal or an inorganic material, such as an oxide or fluoride, is deposited on a substrate in an oblique direction. SiO is usually used as a deposition material. However, since a vacuum apparatus is used for deposition, a lot of cost is incurred. Also, it is difficult to obtain a uniform evaporation angle throughout a wide range.

As for the rubbing method, a thin film made of organic polymer, e.g., polyimide, is formed on a substrate by a printing process and is then hardened, and the entire substrate is rubbed with a cloth having a uniform strength to thereby determine the orientation of the liquid crystals upon coating the liquid crystals. The rubbing method is suitable for mass production because an alignment process is facilitated. However, in this case, the rubbing may cause scratches. In particular, a large substrate may be non-uniformly rubbed and thus liquid crystals may be non-uniformly aligned. Consequently, different optical characteristics are locally exhibited, causing nonuniformity.

To replace the rubbing method, the photo-alignment method involving no physical contact has been studied. As for the photo-alignment method, an alignment film is manufactured by irradiating polarized ultraviolet (UV) light onto a polymer film. Specifically, the alignment film is manufactured by orientation generated by reaction of a polymer material to polarized UV light. When polarized UV light is irradiated onto polyimide, which is a representative photofunctional polymer, photoreactors aligned in a polarization direction selectively react to the polarized UV light to thereby manufacture an oriented alignment film.

In the case of the photo-alignment method, the speed of manufacturing the alignment film is determined by several factors, including the alignment speed of photofunctional polymer and the intensity of UV light. In particular, a polarizer is required in order to use polarized UV light. By using a polarizer having a high transmittance at an absorption wavelength of the photofunctional polymer, the speed of manufacturing the alignment film may be improved even though the same photofunctional polymer and UV lamp are used.

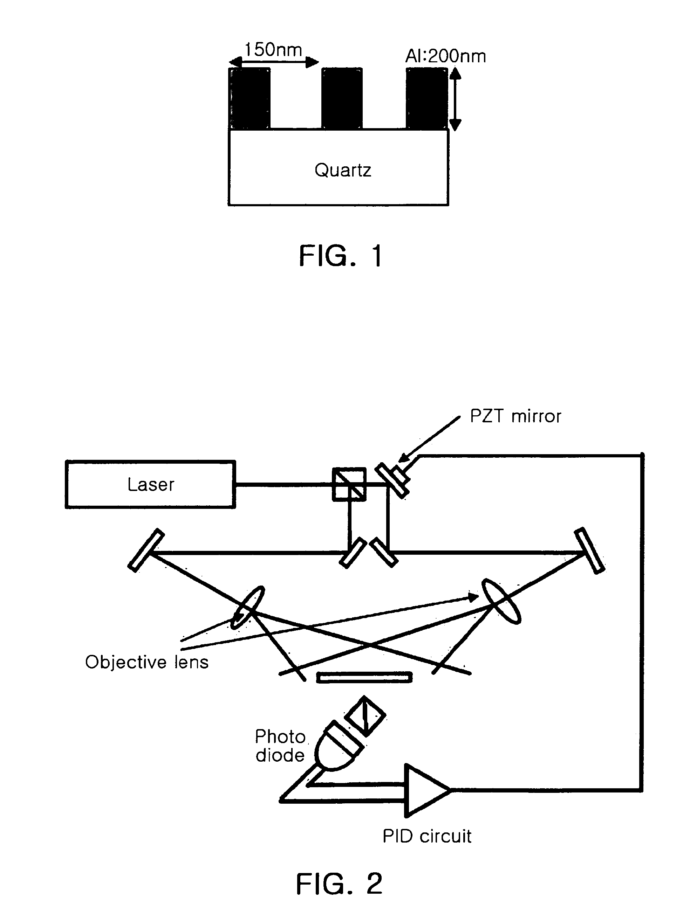

As illustrated in FIG. 1, a conventional UV polarizer includes an aluminum wire grid having a pitch of 150nm and a height of 200nm. The conventional UV polarize is excellent in the degree of polarization in a UV range. However, UV light is absorbed into the polarizer, resulting in reduction in a total transmittance.

The present inventors confirmed that a wire grid was smoothly formed when an anti-reflection layer was used in the manufacturing of a double-layer wire grid polarizer by using a photo-alignment method, and the transmittance of the manufactured polarizer was also improved in a UV range when a thin double-layer metal thin film was used. Based on this knowledge, the present inventors completed the inventive polarizer.

### [Disclosure]

### [Technical Problem]

An aspect of the present invention provides a UV high-transmittance double-layer wire grid polarizer for a photo-alignment film, which is capable of improving a manufacturing efficiency of a photo-alignment film.

An aspect of the present invention also provides a method for manufacturing a UV high-transmittance double-layer wire grid polarizer for a photo-alignment film.

### [Technical Solution]

According to an aspect of the present invention, there is provided a UV high-transmittance double-layer wire grid polarizer for a photo-alignment film, including: a substrate; an anti-reflection layer disposed on the substrate; a patterned photoresist layer disposed on the anti-reflection layer; and metal thin films disposed on the photoresist layer and the anti-reflection layer.

According to another aspect of the present invention, there is provided a method for manufacturing a UV high-transmittance double-layer wire grid polarizer for a photo-alignment film, including: forming an anti-reflection layer on a substrate; forming a photoresist layer by coating a photoresist on the anti-reflection layer; forming wire grid patterns by selectively exposing the photoresist layer according to patterns formed by laser interference light and developing the exposed photoresist layer; and depositing a metal on the wire grid patterns.

The metal may be deposited using an electron-beam evaporation process or a sputtering process.

The substrate may be a quartz substrate or a UV transmitting glass.

The anti-reflection layer may have a thickness of 50-500nm.

The photoresist layer may have a thickness of 50-200nm.

The metal thin film may include a material selected from the group consisting of Al, Ag, Pt, Au, Cu, Cr, and alloys including a combination of two or more of the above.

The metal thin film may have a thickness of 10-30nm.

The wire grid patterns may have a pitch of 100-200nm

### [Advantageous Effects]

According to embodiments of the present invention, the wire grids may be smoothly formed by using the anti-reflection layer in manufacturing the double-layer wire grid polarizer. Since the metal is deposited after the wire grids of the photoresist layer are formed, a dry etching process for forming wire grids is not required as compared to the conventional art. The dry etching process is a process of forming patterns using the reaction of a metal layer to gas plasma. The use of the dry etching process increases the manufacturing costs. Since the dry etching process is not used in the present invention, the manufacturing costs may be reduced. Furthermore, according to the embodiments of the present invention, a thin double-layer wire grid polarizer is manufactured. Thus, the transmittance in the UV range is improved as compared to the conventional single-layer wire grid polarizer. Moreover, the degree of polarization is improved and the manufacturing efficiency of the photo-alignment film is improved.

### [Description of Drawings]

FIG. 1 is a schematic cross-sectional view of a conventional UV wire grid polarizer.
FIG. 2 is a schematic view of a laser apparatus which is used in interference exposure to form photoresist patterns according to an embodiment of the present invention.
FIG. 3 is a sectional view of a UV high-transmittance double-layer wire grid polarizer according to an embodiment of the present invention.
FIG. 4 is a scanning electron microscope (SEM) image of the UV high-transmittance double-layer wire grid polarizer according to the embodiment of the present invention.

### [Best Mode]

According to an aspect of the present invention, a UV high-transmittance double-layer wire grid polarizer for a photo-alignment film includes: a substrate; an anti-reflection layer disposed on the substrate; a patterned photoresist layer disposed on the anti-reflection layer; and metal thin films disposed on the photoresist layer and the anti-reflection layer.

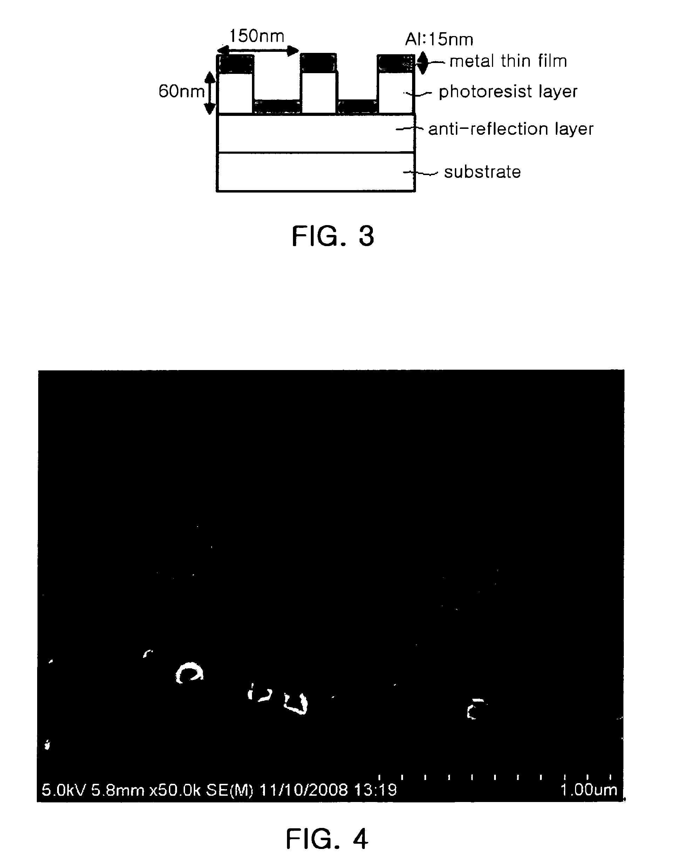

As illustrated in FIG. 3, the term "substrate" used in the present invention refers to a basic component of a polarizer, and the substrate may be formed of any material only if light can be transmitted therethrough. Examples of the substrate may include a quart substrate, a UV transmitting glass, and a plastic substrate.

The term "anti-reflection layer" used in the present invention refers to a layer which is coated on a substrate before a photoresist layer is coated. During a process of forming a wire grid on a photoresist layer by laser interference exposure, the anti-reflection layer prevents a grid from being not formed smoothly due to internal reflection or interference reflection of a laser. In the case in which the anti-reflection layer is absent, a wire grid is not smoothly formed because internal reflection of a laser occurs at a photoresist layer. On the contrary, in the case in which the anti-reflection layer is present, a wire grid is smoothly formed because internal reflection is absorbed.

The anti-reflection layer used in the present invention is not specifically limited only if it can absorb internal reflection of a laser. However, a wavelength of a laser used in interference exposure, an angle between two exposure beams, a refractive index of an anti-reflection material and so on must be taken into consideration. I-con, DUV 42p of Brewer Science or AZ BARLi of Clariant may be used.

The thickness of the anti-reflection layer may be changed depending on a refractive index of an anti-reflection material, a kind of a laser used, an angle between two beams during interference exposure, and so on. A uniform anti-reflection layer may be manufactured by a spin coating process when the thickness of the anti-reflection layer is in the range of 50-500nm.

The term "photoresist layer" used in the present invention refers to a layer which may react to a laser interference exposure to form a wire grid. By laser-exposing the photoresist layer and developing the laser-exposed photoresist layer using a KOH-containing developer, patterns may be formed depending on photosensitivity to a laser. The photoresist layer used in the present invention is not specifically limited only if it is made of a UV photoresist material pertinent to a laser wavelength. SEPR 701 of Shin-Etsu Chemical Co., LTD, ULTRA i-123 of Rohm and Hass company, or AZ 1512 of Clariant may be used. The thickness of the photoresist layer may be in the range of 50-200nm.

A smaller pitch is advantageous in increasing the degree of polarization of the wire grid polarizer. However, patterns having a pitch of 100nm or less are difficult to form by interference exposure. Hence, a pitch of a wire grid may be adjusted to be within the range of 100-200nm.

When a metal is deposited on the photoresist layer in which wire grid patterns are formed by the laser interference exposure and development, metal thin films are doubly formed on the photoresist layer of the wire grid pattern and the anti-reflection layer exposed between the wire grid patterns after the photoresist layer is developed.

When the metal layers are formed too thickly, UV transmittance may be reduced. UV transmittance may be maximized when the thickness of the metal layer is 30nm or less. When the thickness of the metal layer is 10nm or less, the degree of polarization is lowered and photo-alignment is difficult to form in a desired direction. Thus, the thickness of the metal layer may be adjusted to be within the range of 10-30nm.

The metal used in the present invention may be selected from the group consisting of Al, Ag, Pt, Au, Cu, Cr, and alloys including a combination of two or more of the above. Aluminum (Al) may be used, considering UV polarization.

Compared with the conventional UV polarizer, the UV high-transmittance double-layer wire grid polarizer according to the embodiment of the present invention have improved transmittance and degree of polarization, thereby making it possible to enhance the efficiency in the manufacturing process of the photo-alignment film.

According to another aspect of the present invention, a method for manufacturing a UV high-transmittance double-layer wire grid polarizer for a photo-alignment film include: forming an anti-reflection layer on a substrate (step 1); forming a photoresist layer by coating a photoresist on the anti-reflection layer (step 2); forming wire grid patterns by selectively exposing the photoresist layer according to patterns formed by laser interference light and developing the exposed photoresist layer (step 3); and depositing a metal on the wire grid patterns (step 4).

Step 1 is to coat the anti-reflection layer on a substrate. The substrate is a basic component of a polarizer and may be formed of any material only if light can be transmitted therethrough. Examples of the substrate may include a quartz substrate, a UV transmitting glass, and a plastic substrate.

The anti-reflection layer refers to a layer which is coated on the substrate before the photoresist layer is coated thereupon. During a process of forming a wire grid on the photoresist layer by laser interference exposure, the anti-reflection layer prevents a grid from being not formed smoothly due to internal reflection or interference reflection of a laser. In the case in which the anti-reflection layer is absent, a wire grid is not smoothly formed because internal reflection of a laser occurs at a photoresist layer. On the contrary, in the case in which the anti-reflection layer is present, a wire grid is smoothly formed because internal reflection is absorbed. The anti-reflection layer used in the present invention is not specifically limited only if it can absorb internal reflection of a laser. I-con, DUV 42p of Brewer Science or AZ BARLi of Clariant may be used.

The thickness of the anti-reflection layer may be changed depending on a refractive index of an anti-reflection material, a kind of a laser used, an angle between two beams during interference exposure, and so on. The thickness of the anti-reflection layer may be in the range of 50-500nm.

Step 2 is to coat the photoresist layer on the anti-reflection layer. The photoresist layer refers to a layer which may react to laser interference exposure to form a wire grid. When the photoresist layer is exposed to a laser and developed, only portions which do not react to the laser remain, thereby forming a wire grid. Since a dry etching process is not used for forming the patterns, manufacturing costs may be reduced.

The photoresist layer used in the present invention is not specifically limited only if it can react to the laser. SEPR 701 of Shin-Etsu Chemical Co., LTD, ULTRA i-123 of Rohm and Hass company, or AZ 1512 of Clariant may be used.

Step 3 is to form the wire grid patterns by performing the laser interference exposure on the coated photoresist layer. If using an optical path difference (phase difference) of the laser, constructive interference and destructive interference of the laser occur at regular intervals. Using this, the wire grid having a constant pitch may be formed. The pitch of the wire grid may be controlled by adjusting the wavelength of the laser.

For the purpose of polarizing the UV range, the pitch of the wire grid may be adjusted to 200nm or less.

Step 4 is to deposit the metal on the wire grid patterns. As illustrated in FIG. 3, the metal layer may be doubly formed on the grids and the anti-reflection layer exposed between the grids by depositing the metal on the wire grid patterns formed in Step 3. The metal may be deposited using an electron-beam evaporation process or a sputtering process. The electron-beam evaporation process is favorable in view of deposition efficiency and deposition orientation.

When the metal layer is formed too thickly, UV transmittance is affected. UV transmittance may be maximized when the thickness of the metal layer is 30nm or less. The metal used in the present invention may be aluminum, considering UV polarization.

### [Mode for Invention]

Hereinafter, embodiments of the present invention will be described. It should be noted that the following embodiments are only to aid in understanding the present invention, and the invention is not limited thereto.

Embodiment 1: Manufacture of UV high-transmittance

### double-layer wire grid polarizer

### 1. Formation of anti-reflection layer and photoresist layer

In this embodiment, a quartz substrate having a size of 10cm X10cm was used, DUV 42p (Brewer Science) was used as the anti-reflection layer. Ultra i-123 (Rohm and Hass company) was used as the photoresist.

The anti-reflection layer (DUV 42p) was coated on the quartz substrate to a thickness of 60nm. After coating the anti-reflection layer, Ultra i-123 was coated to a thickness of 60nm to form the photoresist layer.

### 2. Formation of wire grid patterns by laser interference exposure

In order to form the wire grid patterns on the substrate prepared in the section 1, an interference exposure system was used. As illustrated in FIG. 2, the interference exposure system used a beam splitter to split a 266nm laser beam into two beams, and used an objective lens to magnify the beams and expose the photoresist layer. At this time, a photodiode was used to read variation in the optical path difference (phase difference) of the two beams due to change in external environment, and a PID circuit and a PZT mirror were used to constantly maintain the optical path difference. After the interference exposure and development, wire grid patterns having a pitch of 150nm, which was shorter than the laser wavelength, were formed.

### 3. Metal deposition on wire grid patterns

By depositing 15nm of aluminum on the photoresist wire grid patterns formed in the section 2 by e-beam deposition, the UV high-transmittance double-layer wire grid polarizer **such as** **FIG. 3** was manufactured.

In order to confirm the grid and the metal deposition degree of the manufactured UV high-transmittance double-layer wire grid polarizer, a SEM image was taken and shown in FIG. 4. Referring to FIG. 4, due to the use of the anti-reflection layer, the wire grid was smoothly formed and aluminum was uniformly deposited.

### Experimental example 1: Measurement of transmittance

The transmittance was measured using the UV high-transmittance double-layer wire grid polarizer manufactured in Embodiment 1. When random polarized light was incident, the transmittance of the conventional single-layer polarizer illustrated as the comparative example in FIG. 1 was 40% in a 310nm wavelength. The transmittance of the polarizer according to the embodiment of the present invention was 60%, which was 1.5 times higher than that of the conventional polarizer.

Experimental example 2: Measurement of orientation of

### liquid crystals

An alignment film was formed by using the UV high-transmittance double-layer wire grid polarizer of Embodiment 1 in a cycloolefin copolymer film, and the orientation of liquid crystals was measured. As a result of measurement on the orientation of the liquid crystals, it was confirmed that an alignment film comparable to an alignment film formed using a single-layer polarizer was manufactured.

Therefore, even though the degree of polarization was partially reduced, an alignment film having a comparable level of polarization was manufactured. Furthermore, the transmittance of the UV high-transmittance double-layer wire grid polarizer according to the embodiment of the present invention is improved. Thus, the production speed of the alignment films may be improved, and the manufacturing efficiency of the alignment films using the photo-alignment method may be improved.

## Claims

1. A UV high-transmittance double-layer wire grid polarizer for a photo-alignment film, comprising:
a substrate;
an anti-reflection layer disposed on the substrate;
a patterned photoresist layer disposed on the anti-reflection layer; and
metal thin films disposed on the photoresist layer and the anti-reflection layer.

2. The UV high-transmittance double-layer wire grid polarizer of claim 1, wherein the substrate is a quartz substrate or a UV transmitting glass.

3. The UV high-transmittance double-layer wire grid polarizer of claim 1, wherein the anti-reflection layer has a thickness of 50-500nm.

4. The UV high-transmittance double-layer wire grid polarizer of claim 1, wherein the photoresist layer has a thickness of 50-200nm.

5. The UV high-transmittance double-layer wire grid polarizer of claim 1, wherein the metal thin film comprises a material selected from the group consisting of Al, Ag, Pt, Au, Cu, Cr, and alloys including a combination of two or more of the above.

6. The UV high-transmittance double-layer wire grid polarizer of claim 1, wherein the metal thin film has a thickness of 10-30nm.

7. The UV high-transmittance double-layer wire grid polarizer of claim 1, wherein grid patterns have a pitch of 100-200nm.

8. A method for manufacturing a UV high-transmittance double-layer wire grid polarizer for a photo-alignment film, the method comprising:
forming an anti-reflection layer on a substrate;
forming a photoresist layer by coating a photoresist on the anti-reflection layer;
forming wire grid patterns by selectively exposing the photoresist layer according to patterns formed by laser interference light and developing the exposed photoresist layer; and
depositing a metal on the photoresist layer in which wire grid patterns are formed.

9. The method of claim 8, wherein the metal is deposited using an electron-beam evaporation process or a sputtering process.

10. The method of claim 8, wherein the substrate is a quartz substrate or a UV transmitting glass.

11. The method of claim 8, wherein the anti-reflection layer has a thickness of 50-500nm.

12. The method of claim 8, wherein the photoresist layer has a thickness of 50-200nm.

13. The method of claim 8, wherein the metal thin film comprises a material selected from the group consisting of Al, Ag, Pt, Au, Cu, Cr, and alloys including a combination of two or more of the above.

14. The method of claim 8, wherein the metal thin film has a thickness of 10-30nm.

15. The method of claim 8, wherein the wire grid patterns have a pitch of 100-200nm.

16. A photo-alignment film manufactured using the UV high-transmittance double-layer wire grid polarizer of any one of claims 1 to 7.
